# EUROPEAN PATENT SPECIFICATION

(11) **EP 0 403 603 B1**
(45) Date of publication and mention of the grant of the patent: **26.01.1994**
(21) Application number: 89910678.5
(22) Date of filing: 27.09.1989
(51) Int. Cl.: E21B 49/08

(54) **MEMBRANE-SAMPLE CONTAINER**
MEMBRAN-MUSTERHALTER
RECIPIENT POUR ECHANTILLONS AVEC MEMBRANE

(30) Priority: 29.09.1988 NO 884336
(43) Date of publication of application: 27.12.1990
(73) Proprietor: NORSK HYDRO A/S, 0257 Oslo 2 (NO)
(72) Inventor: BOE, Einar, N-3610 Notodden (NO)
(74) Representative: Wilhelms, Rolf E., Dr.
(86) International application number: NO8900100
(87) International publication number: WO9003493

(56) References cited:
- WO-A-87/07585
- DE-C- 915 044
- SE-B- 300 734
- US-A- 2 595 084

## Description

The invention relates to a container for transportation and long time storage of oil/gas samples.

During oil and gas production, automatic samplers are sent down the well for collection of samples. The samples are transferred to the transportation containers which are sent to the analysis laboratory. Samples from oil/gas separators are also transferred to the transportation containers for transportation to the laboratory. Some samples are to be stored for many years and therefore, high demands are set to the containers diffusion tightness.

It is very important that the containers be clean, sterile and free of air to get representative samples. The containers usually used for this purpose today, are based on using mercury to replace the air in the containers. When oil/gas is filled into the container the mercury will be displaced and transmitted to an extra container for collection. Today when using mercury, strict safety procedures are practised. The area where the oil/gas is transferred to the transportation containers is being shut off. The operators must use special accident preventing clothes and gas masks and are submitted to medical examination (urine specimen) both before and after the transferences. Mercury is poisonous and therefore represents an environmental problem. It has therefore been of great interest having developed a container free from mercury in which the accuracy of analyzing of oil/gas would be of no less quality than before.

Such a container has been described in Norwegian patent application No. 862367. It consists of a hollow body with in- and outlets at each side of the container. The container is built up by two half parts in which a metal membrane separates the hollow body into two chambers. The container may have an inner lining where the membrane is firmly welded between the two halves of the lining. The in- and outlets are arranged perpendicularly to the membrane. Initially the membrane is directed towards one of the halves of the container. When filling oil into the container, the membrane will reverse towards the opposite side.

Such a container must be used over a very wide range of pressures from about 0.5 - 700 bar. The containers are tested at a pressure of above 1000 bar. The use of the container as described in Norwegian patent application No. 862367, resulted in leakage problems at pressure testing. Further, it was found that the membrane material chosen is very important. When using steel membranes, the membrane thickness had to be reduced so much that a controlled reversal of the membrane would be impossible. Even with membrane thichnesses below 5 mm, the differential pressure over the membrane was so high that it is only useable for samples from the bottom of the well.

The object of the invention is to develop a sample container which can be used for all types of oil/gas samples that are taken when testing a well or a separator. It is important to avoid the use of mercury without lowering the analysis accuracy of the samples. Another object is to provide a container being tight during pressure variations. In addition, it is important that the membrane is inert to the environment, diffusion tight, and that the pressure difference over the membrane is low.

These and other objects of the invention are obtained with the apparatus described below, and the invention is further defined and characterized in the following claims.

The sample container consists mainly of a spherical body including two container halves having a metal membrane fixed between the two container halves' flange portions. The membrane and the two container halves are complementary shaped being hemispherical with a planar portion arranged perpendicular to the containers in- and outlet passages. The flange of the membrane forms the packing between the two container halves. Such a container is known from WO87/07585. The membrane may be equipped with a reinforcement plate positioned perpendicular to the in- and outlet passages. The container may be used for a very wide pressure range, in the order of 0.5 - 700 bar. Therefore, the reversing pressure of the membrane must not exceed 0.5 bar. Lead was found being a well suited membrane/packing material, but other pure, soft metals may also be used. To ensure a leakage proof container at large pressure variations, the container is equipped with a resilent packing nose at the oil/gas side. The container has only metal packings. The in- and outlet passages are formed as annular gaps that together with the reinforcement plate reduces the creep of the membrane material.

Other features of the invention will be described in more detail below and with reference to the figures 1-3, wherein
- Fig. 1: shows the partial sectional view of the container and the valves
- Fig. 2: shows the shape of the membrane
- Fig. 3a: shows the hemispherical part of the container at the oil/gas side
- Fig. 3b: shows the labyrinth packing at the oil/gas side
- Fig. 3c: shows the inner plug inside the in- and outlet passages.

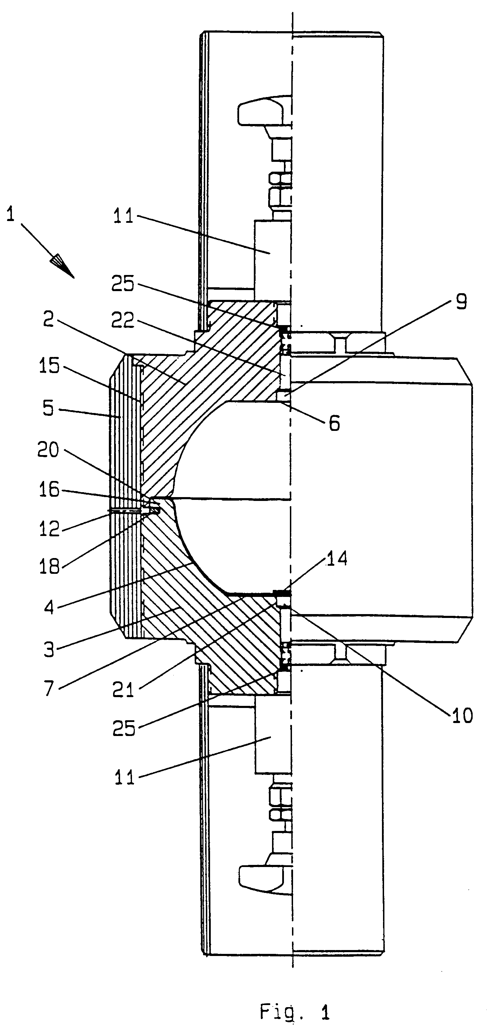

Figure 1 shows the partial sectional view of the container 1. It consists of two hemispherical parts 2,3 with a metal membrane 4 inbetween. The two parts are screwed to a sleeve 5. Both the container halves and the membrane have planar portions 6,7,8 in order to ensure that the membrane is reversed uniformly and under control. It was found convenient to use a composition of water/glycole as counterpressure medium in the container. Thereby, the container 1 has an inlet/outlet passage 9 for water/glycole at one side and an equal arrangement for oil/gas at the other side. These are arranged perpendicular to the membrane. It is equipped with high pressure valves 11 at each side. Further, the container has a control opening 12 in order to test the gas tightness.

The container shown in the figure has a volume of 0.7 l. The design pressure is 750 bar and the container's operating range reaches from about 0.5 to 700 bar. The containers are being pressure testet at 1125 bar.

When such a container is being used for storage of oil/gas samples, it is demanded that the membrane is completely diffusion tight. Therefore, metal was chosen as membrane material. Another demand is that the differential pressure over the membrane has to be low in order to make the container applicable for a wide range of samples, ie. that the membrane material is easily reversed. Both the choice of material and the membrane design influences this.

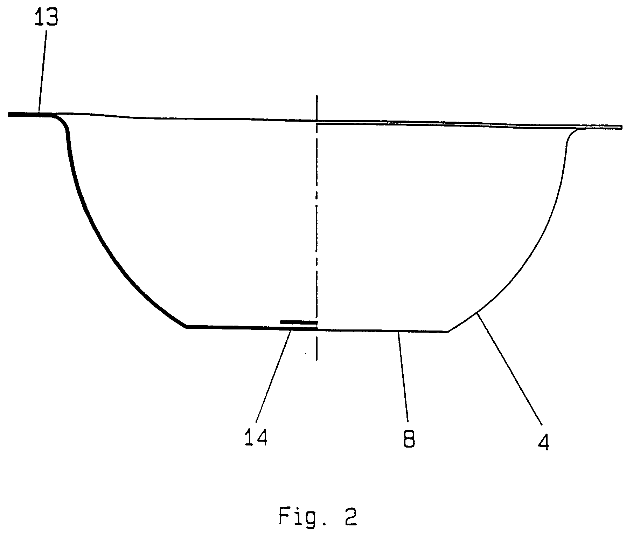

Figure 2 shows the membrane 4 design with a flange 13 and a planar part 8. The membrane has a configuration complementary to the configuration of the two inner hemispherical parts 2,3.

The planar part will cause the start of the reversal of the membrane and also a uniform reversal. The membrane is uniformly thick and may have a reinforcement consisting of a metal plate 14 at the water/glycole side.

At such high pressures as are used here, it was found necessary to use metallic packings. The membrane will function both as a separator between the two parts of the container and also ensure tightness.

Surprisingly, it was found that lead has qualities making it well suited as a membrane material. By using a lead membrane about 0.7 mm thick, reversal pressures may be obtained as low as 0.1 - 0.2 bar. This makes the container suited for a wide spectrum of samples. Other pure, soft metals that normalize quickly after treatment may also be used. For instance gold, silver and aluminium (ductile metals).

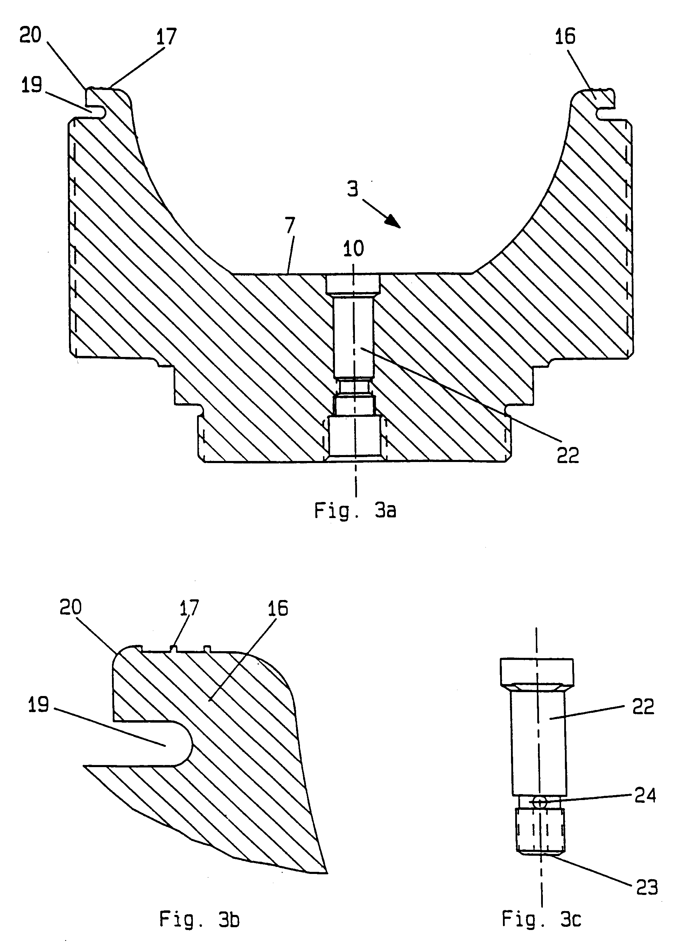

The membrane also will ensure packing between the container halves. Figure 3a shows the container half 3 at the oil/gas side in more detail. This one is formed with a hemispherical inner surface with a planar portion 7 perpendicular to the in- and outlet passages 10. The container half which is made of steel, has threads 15 for fastening to the sleeve 5 (fig. 1).

To ensure the necessary packing between the two container halves, a resilent nose 16 and a labyrinth seal 17 is arranged at the oil/gas side. This is shown in more detail in fig. 3b. The deflection of the nose is restricted by an annular bar 18 (fig. 1) inserted in an annular groove 19 under the nose.

Between the bar 18 and the annular groove 19, there is a margin of some tenths of a millimetre. The annular bar 18 restricts the nose from being compressed and it is therefore avoided that material of the nose reaches the yield point and looses its flexibility.

Initially the lead membrane 4 is formed to the desired shape and then it is mounted into the container half 2 at the oil/gas side.

The membrane 4 is made with a diameter somewhat less than the container half because of the creeping of lead. After assembling and pressure testing, the membrane 4 will be positioned tightly against the inner container surface. The flange 13 of the membrane 4 is forced towards the labyrinth seal 17 with a force of about 40 tons so that it is being stuck and fills the recesses in the labyrinth 17.

As the container halves 2,3 with the lead membrane 4 inbetween are screwed together, an axial force in the order of 90 - 100 tons between the nose 16 and the labyrinth 17 results. Thereby, the nose 16 is compressed depending on the margin between the bar 18 and the groove 19 (0.15 - 0.2 mm).

The nose 16 is shaped being 1 - 1.5 tenths mm higher on the outer than the inner side. When screwing together the halves of the container one will start pressing the top of the nose and squeese lead down into the concave wedge 20 so that it also is being packed with metal.

With a pressure in the order of 700 bar the container will be extended about 0.06 mm. The two functions of the nose will therefore be to compensate the extension that arises with increased pressure in the container, and at the same time compensate for creeping of the material in the packing surface.

If an increase in pressure above 1125 bar should arise, there will be no oil/gas leakage, but water/glycole will leak. This because the labyrinth seal together with the concave wedge between the hemispherical parts, makes a better packing than at the other side where glycole and water are pumped in.

In order to avoid problems with membrane puncture at high pressures, the container's in- and outlet passages 9,10 are formed as an annular gap 21 (fig. 1) connected to the interior of the container. This is achieved by mounting a plug 22 as shown in fig. 3c into the container's openings 9,10. Fluid is then lead into the plug through openings 23 and further out through the openings 24 and into the annular gap (0.1 - 0.15 mm) formed by the plug's outer side and the openings 9,10 in the container. In this way the pressure is spread. The in- and outlet passages in the shape of annular gaps will, together with the membrane's reinforcement plate, prevent creeping of the membrane material. Metallic displacement bodies 25 are also arranged in the gas/oil's in- and outlet passage 10 in order to lower the container's "dead volume".

When mounting the container one of the container halves 2 (without labyrinth packing) is screwed into the sleeve 5 after the valve 11 is mounted. With the valve in a vertical position the hollow body is filled with glycole/water. The other body 3 with the labyrinth packing 17 is being placed in an hydraulic press after the valve is mounted. Here the membrane is pressed against the labyrinth seal such that it is getting stuck and fills the recesses in the labyrinth. Then the body is screwed into the sleeve towards the other one, till an axial force of 90-100 tons is obtained for packing. Because of creeping of the membrane 4 the screwing operation is repeated at least 24 hours later. The container is then turned so that the glycole/water side is turned up.

Helium (1 bar pressure) is filled into the oil/gas side of the container. The membrane is reversed and the filling of helium is stopped when glycol/water leakes out of the valve.

The valves are closed. After 24 hours the container is tested for possible gas leakages. After this test, the container is connected to a high pressure pump and glycole/water is pumped in up to a pressure of 1125 bar. The membrane is then reversed back and the helium is forced out. The container holds this pressure for 0.5 hours and the manometer is checked in order to register possible leakages. Thereafter, the pressure is reduced to 5 bar. At this pressure the container is delivered to the user.

The container receives oil/gas samples at a pressure range of 0.5 to 700 bar. When being used the container is fixed to the sampling device and the valve on the oil/gas side is opened. The pressure from water/glycol will resist the pressure from the oil/gas. Not until the valve towards the water is opened, the membrane will begin reversing because the water/glycole is being forced out and oil/gas flows in. The membrane is replaced after each use and the container is testet as described above.

These containers are useful both for sampling and transfer of samples and the use of mercury is avoided. Because a low reversal pressure for the membrane is achieved, the sample containers may be used for all sorts of oil samples taken for well testing or separator testing. These samples (samples from the bottom of the well, well head samples and separator samples) may be stored in the container for a long period of time. As long as the resilient nose compensates for pressure variations, the containers will be free of leakage.

## Claims

1. Sample container (1) especially for oil/gas samples consisting of a body with spherical interior surface formed of two half parts (2,3) which are arranged for being joined together along the pheriphery thereof, with a metal membrane (4) inbetween, which can be reversed between the two half parts of the body, and where in-/outlet passages (9,10) are arranged perpendicular to the membrane and where both membrane and each half part of the body have planar portions (8,9,10) perpendicular to the respective passage, **characterized in that**
a resilent packing nose (16) equipped with a labyrinth packing (17) is arranged at one of the half parts (3) of the container.

2. Container according to claim 1,
**characterized in that**
an annular bar (18) is arranged in an annular groove (19) below the nose (16) to restrict the deflection of the nose.

3. Container according to claim 1,
**characterized in that**
the outer part of the nose (16) is higher than the inner part.

4. Container according to claim 1,
**characterized in that**
the flange of the membrane (4) is arranged to completely fill the recesses in the labyrinth packing (17) and thereby being completely stuck and stop the creeping of the membrane material.

5. Container according to claim 1 and 4,
**characterized in that**
the membrane (4) is made of a soft metal.

6. Container according to claim 1,
**characterized in that**
the membrane is equipped with a circular reinforcement plate (14) of metal.

7. Container according to claim 1,
**characterized in that**
the in-/outlet passages (9,10) are formed as annular gaps (21) connected to the interior of the container.

8. Container according to claim 1,
**characterized in that**
replacement bodies (25) are arranged in the in-/outlet passages for gas/oil.

9. Container according to claim 1,
**characterized in that**
it has only metallic packings.

## Patentansprüche

1. Probenbehälter (1), insbesondere für Öl-/Gasproben, bestehend aus einem Körper mit kugelförmiger innerer Oberfläche, die aus zwei Halbteilen (2,3) gebildet ist, die zur Verbindung miteinander entlang ihrer Peripherie angeordnet sind, wobei eine zwischenliegende Metallmembran (4) zwischen den beiden Halbteilen des Körpers umgekehrt werden kann, und wobei Ein-/Ausgangspassagen (9,10) senkrecht zur Membran angeordnet sind, und wobei beide Membranen und jedes Halbteil des Körpers planare Bereiche (8,9,10) auf weisen, die senkrecht zur jeweiligen Passage ausgebildet sind,
dadurch gekennzeichnet, daß
ein elastischer Dichtungsansatz (16), der mit einer Labyrinthdichtung (17) ausgebildet ist, an einem der Halbteile (3) des Behälters angeordnet ist.

2. Behälter nach Anspruch 1, dadurch gekennzeichnet, daß ein annularer Stab (18) in einer annularen Ausnehmung (19) unterhalb des Ansatzes (16) angeordnet ist, um die Ablenkung des Ansatzes zu begrenzen.

3. Behälter nach Anspruch 1, dadurch gekennzeichnet, daß der äußere Teil des Ansatzes (16) höher als der innere Teil ist.

4. Behälter nach Anspruch 1, dadurch gekennzeichnet, daß die Flanke der Membran (4) derart angeordnet ist, daß sie völlig die Ausnehmungen in der Labyrinthdichtung (17) ausfüllt und dabei vollständig festliegt, und das Kriechen des Membranmaterials stoppt.

5. Behälter nach Anspruch 1 und 4, dadurch gekennzeichnet, daß die Membran (4) aus einem weichen Metall hergestellt ist.

6. Behälter nach Anspruch 1, dadurch gekennzeichnet, daß die Membran mit einer kreisförmiger Verstärkungsplatte (14) aus Metall ausgebildet ist.

7. Behälter nach Anspruch 1, dadurch gekennzeichnet, daß die Ein-/Auslaßpassagen (9,10) als annulare Spalten (21) ausgebildet sind, die mit dem Inneren des Behälters verbunden sind.

8. Behälter nach Anspruch 1, dadurch gekennzeichnet, daß die Austauschkörper (25) in den Ein-/Auslaßpassagen für Gas/Öl angeordnet sind.

9. Behälter nach Anspruch 1, dadurch gekennzeichnet, daß er nur eine metallische Dichtung aufweist.

## Revendications

1. Récipient (1) à échantillon spécialement destiné à des échantillons de pétrole-gaz, constitué d'un corps ayant une surface interne sphérique formée de deux moitiés (2, 3) qui sont destinées à être raccordées à leur périphérie, une membrane métallique (4) étant placée entre elles et pouvant être retournée entre les deux moitiés du corps, et des passages d'entrée-sortie (9, 10) disposés perpendiculairement à la membrane et la membrane et chaque moitié du corps possèdent des parties planes (8, 9, 10) qui sont perpendiculaires au passage respectif, caractérisé en ce qu'un nez élastique (16) de garniture ayant une garniture labyrinthe (17) est disposé dans l'une des moitiés (3) du récipient.

2. Récipient selon la revendication 1, caractérisé en ce qu'une barre annulaire (18) est placée dans une gorge annulaire (19) disposée au-dessous du nez (16) afin qu'elle limite le fléchissement du nez.

3. Récipient selon la revendication 1, caractérisé en ce que la partie externe du nez (16) est plus haute que la partie interne.

4. Récipient selon la revendication 1, caractérisé en ce que le flasque de la membrane (4) est destiné à remplir totalement les cavités de la garniture labyrinthe (17) si bien qu'il est ainsi totalement collé, et le fluage du matériau de la membrane est ainsi arrêté.

5. Récipient selon la revendication 1 et 4, caractérisé en ce que la membrane (4) est formée d'un métal mou.

6. Récipient selon la revendication 1, caractérisé en ce que la membrane a une plaque circulaire d'armature (14) formée de métal.

7. Récipient selon la revendication 1, caractérisé en ce que les passages d'entrée-sortie (9, 10) sont formés par des espaces annulaires (21) reliés à l'intérieur du récipient.

8. Récipient selon la revendication 1, caractérisé en ce que des corps (25) de remplacement sont disposés dans les passages d'entrée-sortie de pétrole-gaz.

9. Récipient selon la revendication 1, caractérisé en ce qu'il possède uniquement des garnitures métalliques.
